# EUROPEAN PATENT APPLICATION

(11) **EP 4 814 458 A1**
(43) Date of publication of application: **30.09.2026**
(21) Application number: 24882232.2
(22) Date of filing: 11.10.2024
(51) Int. Cl.: G01K 11/322, G01D 5/26

(54) **TEMPERATURE MEASUREMENT DEVICE AND TEMPERATURE MEASUREMENT METHOD**

(30) Priority: 24.10.2023 JP 2023182760
(71) Applicant: Yokogawa Electric Corporation, Musashino-shi, Tokyo 180-8750 (JP); Toyota School Foundation, Nagoya-shi, Aichi-ken 468-8511 (JP)
(72) Inventor: KUMAGAI, Yoshihiro, Musashino-shi, Tokyo 180-8750 (JP); TEZUKA, Shin-ichirou, Musashino-shi, Tokyo 180-8750 (JP); SAITO, Kazuya, Nagoya-shi, Aichi 468-8511 (JP)
(74) Representative: Winter, Brandl - Partnerschaft mbB
(86) International application number: PCT/JP2024/036517
(87) International publication number: WO 2025/089119

(57) **Abstract**

A temperature measurement apparatus (1) includes a control unit (31). The control unit (31) acquires a Brillouin Frequency Shift from a measurement position of a measurement object optical fiber (10); when an amount of exposure time (t), which is an amount of time during which the measurement position on the measurement object optical fiber (10) is exposed to a predetermined temperature environment, has passed by a predetermined amount of time, corrects the Brillouin Frequency Shift is corrected in accordance with a drift toward a high frequency side, based on the amount of exposure time (t); and calculates a measurement temperature at the measurement position based on the corrected Brillouin Frequency Shift.

## Description

### Field

The present invention relates to a temperature measurement apparatus and a temperature measurement method. Background

In recent years, there is an increasing demand for temperature measurement under a high temperature environment in industries such as a plant industry, a heavy electric industry, and an upstream oil and natural gas industry. An optical fiber formed of silica glass, which has a high melting point (1000°C or higher), can be used even under a high temperature environment, and thus has attracted attention as a high temperature sensor.

As a Distributed Temperature Sensor (DTS) using an optical fiber as a temperature measurement sensor, a Raman Optical Time Domain Reflectometry (ROTDR) using scattered light of Raman scattering is generally known and has already been put into practical use.

However, the temperature measurement range of the ROTDR is currently limited to 300°C or lower due to problems such as a change (increase) in transmission loss of an optical fiber as a sensor under a high temperature environment (Non Patent Literature 1). On the other hand, the DTS using Brillouin scattering calculates the temperature from the frequency difference (referred to as a Brillouin Frequency Shift: BFS) between the incident light and the scattered light of Brillouin scattering, and thus is less likely to be affected by the change in the transmission loss in the optical fiber, having a high possibility of achieving high temperature measurement of 300°C or higher.

In recent years, many useful experimental results have been reported from many research institutions. In the results, although the relationship between the BFS and the temperature has been considered to be linear, it has been reported in recent studies that the relationship is nonlinear at 500°C or higher (Non Patent Literature 2). The reason is considered to be that Young's modulus of the optical fiber is nonlinear with respect to temperature.

Brillouin scattering is scattering due to an acoustic wave in an optical fiber. Brillouin scattering includes spontaneous Brillouin scattering and stimulated Brillouin scattering, and spontaneous Brillouin scattering is scattering due to an acoustic wave existing spontaneously in an optical fiber. The stimulated Brillouin scattering is a scattering phenomenon caused by an interaction between two light beams, namely, a light beam incident from one end of the optical fiber (referred to as a pump beam) and a light beam (referred to as probe beam) incident from the other end of the optical fiber to face the beam from the one end and having a frequency lower than that of the pump beam by about 11 GHz.

Typical examples of DTS utilizing spontaneous Brillouin scattering include Brillouin Optical Time Domain Reflectometry (BOTDR) and Brillouin Optical Correlation Domain Reflectometry (BOCDR). Typical examples of the DTS utilizing stimulated Brillouin scattering include Brillouin Optical Time Domain Analysis (BOTDA) and Brillouin Optical Correlation Domain Analysis (BOCDA).

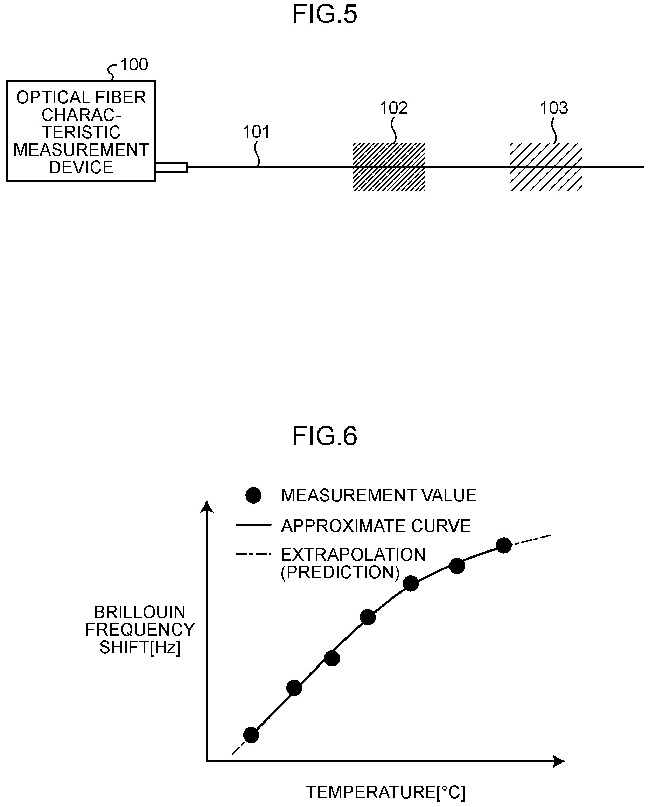

FIG. 5 is an explanatory diagram illustrating an outline of a known temperature measurement apparatus. As illustrated in FIG. 5, the temperature (high temperature) measurement in the DTS is performed using an optical fiber characteristic measurement device 100 and an optical fiber sensor 101 (a measurement object fiber). Here, as positions on the optical fiber sensor 101, a position 102 is defined as a position at which the temperature is relatively high, and a position 103 is defined as a position at which the temperature is relatively low.

FIG. 6 is an explanatory diagram illustrating a relationship between the temperature and the Brillouin Frequency Shift. As illustrated in FIG. 6, using the following BFS-temperature conversion formula (1) calculated from a relationship between the BFS and a temperature (T) in the optical fiber sensor 101 measured in advance, the optical fiber characteristic measurement device 100 converts the BFS measured at the time of temperature measurement into temperature.$T = A ⋅ {BFS}^{2} + B ⋅ BFS + C$

Here, in the BFS-temperature conversion formula (1), A and B are coefficients, and C is a constant. The coefficients A and B and the constant C to be used are values calculated from the relationship between the BFS and the temperature (T) regarding the optical fiber sensor 101 measured in advance.

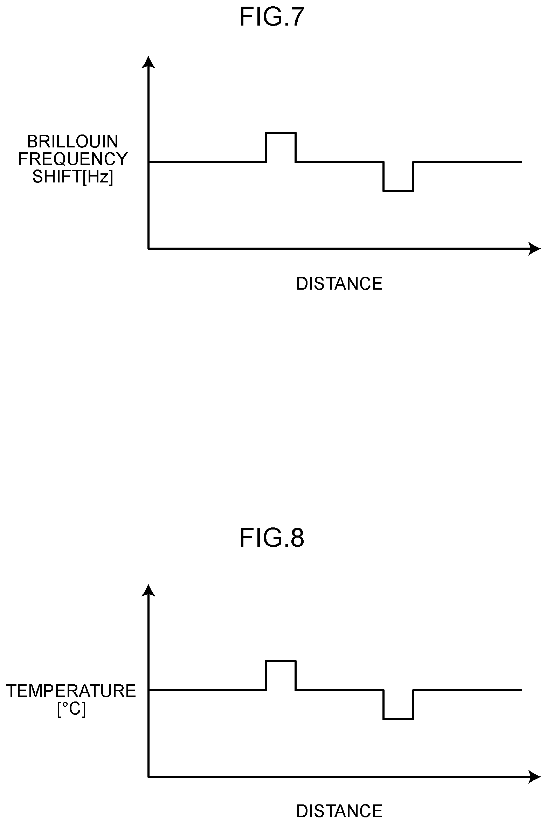

FIG. 7 is a diagram illustrating an example of the Brillouin Frequency Shift at a distance in the longitudinal direction of the optical fiber sensor 101. When a position 102 at which the temperature is relatively high and a position 103 at which the temperature is relatively low are present in the longitudinal direction of the optical fiber sensor 101, the BFS distribution corresponding to the distance is measured as illustrated in FIG. 7.

FIG. 8 is a diagram illustrating an example of a temperature at a distance in the longitudinal direction of the optical fiber sensor. By applying the BFS-temperature conversion formula (1) to the BFS distribution corresponding to the distance in the longitudinal direction of the optical fiber sensor 101 measured in this manner, the optical fiber characteristic measurement device 100 can measure the temperature distribution corresponding to the distance in the longitudinal direction as illustrated in FIG. 8.

In addition, by using the BOCDR and the BOCDA capable of measuring the BFS at high speed for each position of the optical fiber sensor 101, the optical fiber characteristic measurement device 100 can also measure the temporal change of the temperature at any position.

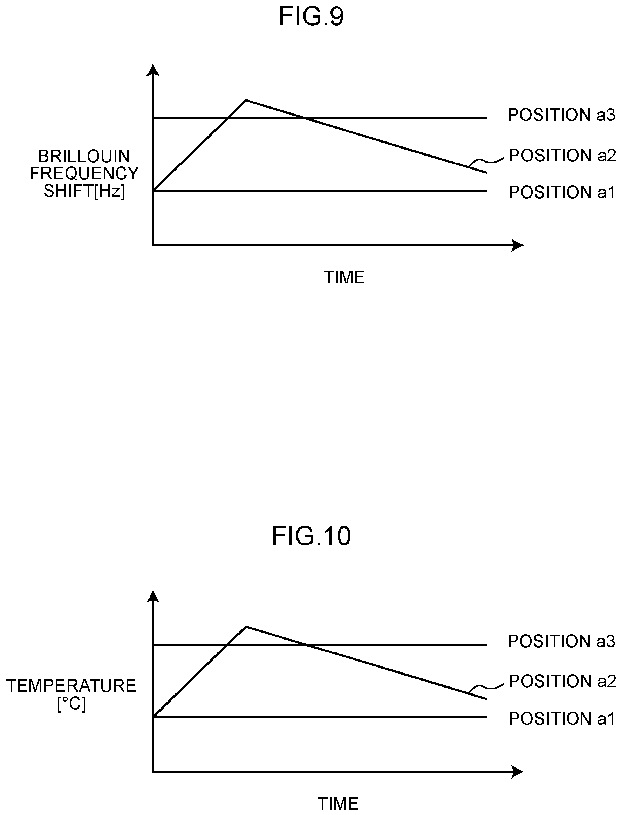

FIG. 9 is an explanatory diagram illustrating a temporal change in the Brillouin Frequency Shift for each position of the optical fiber sensor. As illustrated in FIG. 9, by using the BOCDR and the BOCDA, the optical fiber characteristic measurement device 100 can measure temporal changes in the Brillouin Frequency Shifts at positions a1, a2, and a3 from the optical fiber characteristic measurement device 100 side in the longitudinal direction of the optical fiber sensor 101.

FIG. 10 is an explanatory diagram illustrating a temporal change in temperature for each position on the optical fiber sensor. As illustrated in FIG. 10, by applying the BFS-temperature conversion formula (1) to the temporal changes of the Brillouin Frequency Shifts at the positions a1 to a3 measured, the optical fiber characteristic measurement device 100 can measure temperature changes at the positions a1 to a3.

Meanwhile, since the BFS has sensitivity to strain and temperature, there is a need to avoid addition of strain to the optical fiber sensor 101 at the time of temperature measurement. Examples of typically used methods include a method of fixing a metal tube to an externally provided measurement object in a state where the optical fiber sensor 101 is inserted into the metal tube. The optical fiber sensor 101 is in a free state in the metal tube, and thus is not influenced by strain. In addition, there is also a temperature measurement method in which the influence of strain is eliminated using a known technique (Non Patent Literature 3) of separating strain and temperature from each other. In the following description, it is assumed that no strain is added to the optical fiber sensor 101.

### Citation List

### Patent Literature

Patent Literature 1: JP 5012032 B2
Patent Literature 2: JP 5831189 B2

### Non Patent Literature

Non Patent Literature 1: I. Laarossi, M. A. Quintela, J. M. Lopez-Higuera, "Comparative Experimental Study of a High-Temperature Raman-Based Distributed Optical Fiber Sensor with Different Special Fibers," Sensors 19(3), 574-587 (2019)
Non Patent Literature 2: Y. Li, F. Zhang, and T. Yoshino, "Wide-range temperature dependence of Brillouin shift in a dispersion-shifted fiber and its annealing effect," J. Lightwave Technol. 21(7), 1663-1667 (2003)
Non Patent Literature 3: Weiwen Zou, Zuyuan He, and Kazuo Hotate, "Complete discrimination of strain and temperature using Brillouin frequency shift and birefringence in a polarization-maintaining fiber," Optics Express, Vol. 17, No. 3, 2009, pp. 1248-1255
Non Patent Literature 4: Kazuya Saito and Akira J. Ikushima, "Structural Relaxations And Optical Properties in Silica Glass", NEW GLASS Vol.14 No.4 1999
Non Patent Literature 5: Kazuya Saito, "Fictive temperature : a good indicator for the glass structure and properties" NEW GLASS Vol. 27 No. 104 2012
Non Patent Literature 6: Akio Koike, "Spectroscopic evaluation method of fictive temperature in glass" NEW GLASS Vol.27 No.105 2012
Non Patent Literature 7: Hirokazu MASAI, et al. "Relationship between the first sharp diffraction peak and physical properties of silicon dioxide (SiO2) glasses possessing different fictive temperatures, "Journal of the Ceramic Society of Japan 128 [12] 1038-1044 2020"

### Summary

### Technical Problem

In recent years, there is an increasing demand for temperature measurement under a high temperature environment, leading to a possible scenario assuming a temperature measurement under a high temperature environment of 300°C or higher for a longer hours (tens of thousands of hours). Therefore, the inventors conducted an experiment assuming such temperature measurement for a long hours (tens of thousands of hours).

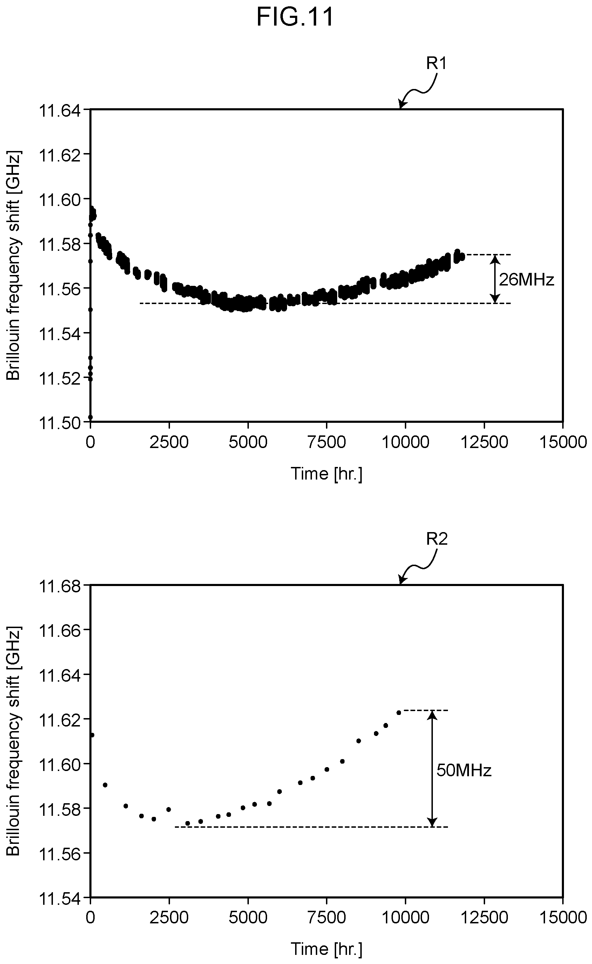

FIG. 11 is a diagram illustrating an experimental result of a temporal change of a Brillouin Frequency Shift when an optical fiber sensor is exposed to a constant temperature environment. An experimental result R1 in FIG. 11 is a result of a temporal change in the Brillouin Frequency Shift when the optical fiber sensor is exposed to a constant temperature environment at 800°C. In addition, an experimental result R2 is a result of a temporal change in the Brillouin Frequency Shift when the optical fiber sensor is exposed to a constant temperature environment at 850°C.

From the experimental results R1 and R2 illustrated in FIG. 11, the inventors have found that the BFS of the optical fiber sensor to be measured changes (drifts) with the amount of exposure time under a high temperature environment with a constant temperature. Here, the drift of the BFS toward the low frequency side with the amount of exposure time is referred to as a low frequency-side drift, and the drift toward the high frequency side is referred to as a high frequency-side drift.

For the BFS changing with the amount of exposure time, it has been newly found that a low frequency-side drift occurs, and then, on and beyond a predetermined exposure time, a high frequency-side drift occurs. For example, in an experimental result R1 at 800°C, a high frequency-side drift of 26 MHz occurs in about 12000 hours, while in an experimental result R2 at 850°C, a high frequency-side drift of 50 MHz occurs in about 12000 hours. Therefore, it has been found that performing temperature measurement with high measurement accuracy for long hours is difficult by the known temperature measurement based on the BFS.

The present invention has been made in view of the above, and aims to provide a temperature measurement apparatus and a temperature measurement method enabling temperature measurement with high measurement accuracy for long hours.

### Solution to Problem

The present invention provides a temperature measurement apparatus, including a control unit that acquires a Brillouin Frequency Shift from a measurement position of a measurement object optical fiber, when an amount of exposure time, which is an amount of time during which the measurement position on the measurement object optical fiber is exposed to a predetermined temperature environment, has passed by a predetermined amount of time, corrects the Brillouin Frequency Shift in accordance with a drift toward a high frequency side, based on the amount of exposure time, and calculates a measurement temperature at the measurement position based on the corrected Brillouin Frequency Shift.

### Advantageous Effects of Invention

According to the present invention, there is an effect that temperature measurement with high measurement accuracy can be performed for long hours.

### Brief Description of Drawings

FIG. 1 is an explanatory diagram illustrating time dependence of the Brillouin Frequency Shift.
FIG. 2 is a block diagram illustrating a functional configuration example of a temperature measurement apparatus according to an embodiment.
FIG. 3 is an explanatory diagram illustrating an example of recording data.
FIG. 4A is a flowchart illustrating an operation example of the temperature measurement apparatus according to the embodiment.
FIG. 4B is a flowchart illustrating an operation example of the temperature measurement apparatus according to the embodiment.
FIG. 5 is an explanatory diagram illustrating an outline of a known temperature measurement apparatus.
FIG. 6 is an explanatory diagram illustrating a relationship between the temperature and the Brillouin Frequency Shift.
FIG. 7 is a diagram illustrating an example of the Brillouin Frequency Shift in a distance in a longitudinal direction of an optical fiber sensor.
FIG. 8 is a diagram illustrating an example of a temperature at a distance in a longitudinal direction of an optical fiber sensor.
FIG. 9 is an explanatory diagram illustrating a temporal change in the Brillouin Frequency Shift for each position on the optical fiber sensor.
FIG. 10 is an explanatory diagram illustrating a temporal change in temperature for each position of the optical fiber sensor.
FIG. 11 is a diagram illustrating an experimental result of a temporal change of a Brillouin Frequency Shift when an optical fiber sensor is exposed to a constant temperature environment.

### Description of Embodiments

Hereinafter, a temperature measurement apparatus and a temperature measurement method according to an embodiment will be described with reference to the drawings. In the embodiment, components having the same function are denoted by the same reference numerals, and redundant description will be omitted. Note that the temperature measurement apparatus and the temperature measurement method described in the following embodiments are merely examples, and do not limit the embodiments. In addition, the following embodiments may be appropriately combined within a range not contradictory.

The temperature measurement apparatus according to the embodiment acquires the BFS at each measurement position on a measurement object optical fiber in the optical fiber sensor. Next, the temperature measurement apparatus according to the embodiment applies the BFS-temperature conversion formula (1) to the acquired BFS to calculate the temperature at each measurement position.

Here, for the measurement object optical fiber, an experiment is performed to pre-obtain, for each annealing temperature, the time dependence of the Brillouin Frequency Shift, more specifically, the high frequency-side drift of the BFS occurring on and beyond a predetermined amount of exposure time. The annealing temperature refers to a heat treatment temperature of the measurement object optical fiber, that is, a temperature to which the measurement object optical fiber is exposed. In addition, annealing time refers to a time during which the measurement object optical fiber is treated at the annealing temperature, that is, a time during which the measurement object optical fiber is exposed to the annealing temperature.

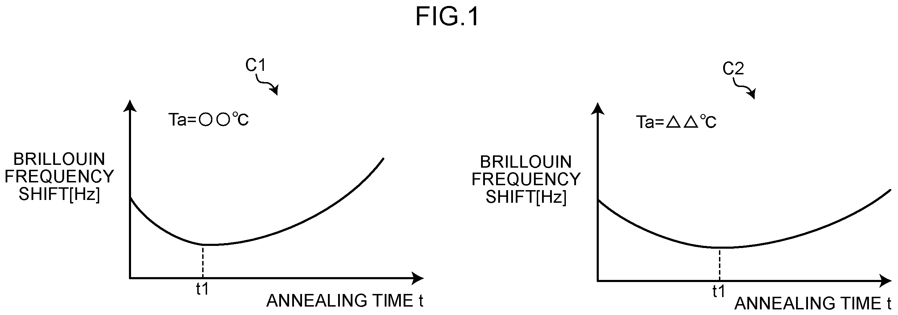

FIG. 1 is an explanatory diagram illustrating time dependence of the Brillouin Frequency Shift. As illustrated in FIG. 1, Case C1 is an experimental result in which the annealing time when the annealing temperature Ta is OO°C is plotted on the horizontal axis and the Brillouin Frequency Shift (BFS) is plotted on the vertical axis. Case C2 is an experimental result in which the annealing time when the annealing temperature Ta is △△°C (○○<△△) is plotted on the horizontal axis and the Brillouin Frequency Shift (BFS) is plotted on the vertical axis. In both Cases C1 and C2, even though the annealing temperature is constant, the high frequency-side drift of the BFS occurs on and beyond a predetermined annealing time. In the following description, the annealing time at which such high frequency-side drift starts is referred to as an amount of time t1 for starting high frequency-side drift.

As illustrated in Cases C1 and C2, regarding the BFS on and beyond the amount of time t1 for starting high frequency-side drift, the high frequency-side drift increases as the annealing time increases. Therefore, regression calculation, etc. to fit the experimental result (Case C1, C2) is performed to obtain, for each annealing temperature, a calculation formula (2) of the BFS correction amount (ΔBFS) for reproducing the high frequency-side drift of BFS corresponding to the amount of exposure time on and beyond the amount of time t1 for starting high frequency-side drift.$ΔBFS \left(t\right) = a ⋅ {\left(t-t1\right)}^{2} + b ⋅ \left(t-t1\right) + c$

Here, in the calculation formula (2) of the BFS correction amount, t is the amount of exposure time, t1 is the amount of time for starting high frequency-side drift, a and b are coefficients, and c is a constant. The amount of time t1 for starting high frequency-side drift, the coefficients a and b, and the constant c indicate different values for each annealing temperature. Note that, in the above calculation formula (2), the expression is expressed by a second-order polynomial, but a third-order polynomial, a fourth-order polynomial, etc. may be used as a matter of course.

By using the calculation formula of the BFS correction amount for each annealing temperature, the temperature measurement apparatus according to the embodiment corrects (subtracts) the BFS on and beyond the amount of time t1 for starting high frequency-side drift in accordance with the drift toward the high frequency side based on the amount of exposure time. This makes it possible for the temperature measurement apparatus according to the embodiment to perform temperature measurement with high measurement accuracy for long hours.

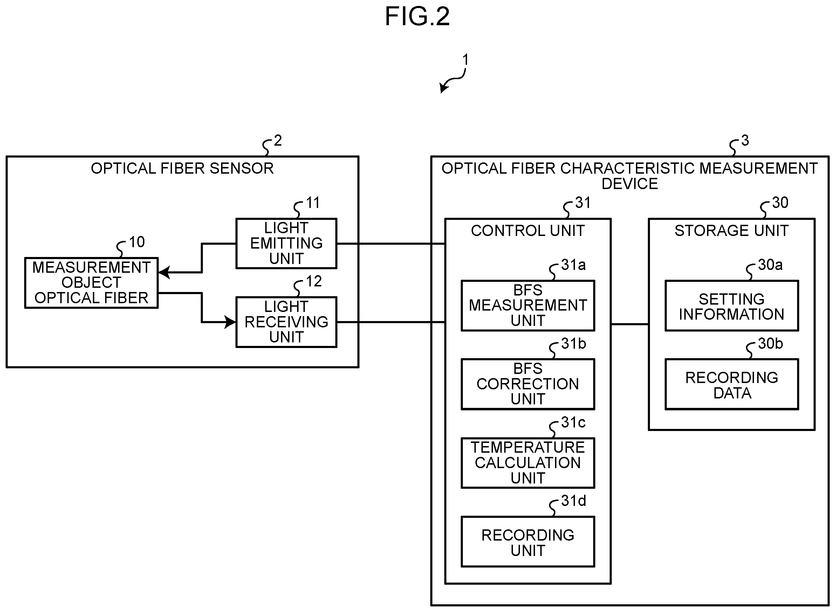

FIG. 2 is a block diagram illustrating a functional configuration example of a temperature measurement apparatus according to the embodiment. As illustrated in FIG. 2, the temperature measurement apparatus 1 includes an optical fiber sensor 2 and an optical fiber characteristic measurement device 3.

The optical fiber sensor 2 includes a measurement object optical fiber 10 used as the Distributed Temperature Sensor, a light emitting unit 11 that emits light (the pump beam and the probe beam) to be incident on the measurement object optical fiber 10, and a light receiving unit 12 that receives scattered light of Brillouin scattering that occurs at each measurement position by the light incident on the measurement object optical fiber 10 by the light emitting unit 11.

Based on the detection result of the light receiving unit 12, the optical fiber characteristic measurement device 3 acquires the BFS attributed to Brillouin scattering that occurs at each measurement position on the measurement object optical fiber 10, and applies the BFS-temperature conversion formula (1) to the acquired BFS to calculate the temperature at each measurement position. Specifically, the optical fiber characteristic measurement device 3 includes a control unit 31 and a storage unit 30.

The storage unit 30 includes nonvolatile memory, etc. and stores setting information 30a, recording data 30b, etc. The setting information 30a is data describing various settings including the BFS-temperature conversion formula (1), the calculation formula (2) of the BFS correction value for each temperature (annealing temperature), the amount of time for starting high frequency drift for each temperature (annealing temperature), etc.

The recording data 30b is data in which a history of measurement results (BFS, measurement temperature) at each measurement position on the measurement object optical fiber 10 is listed in chronological order with a time stamp (measurement date and time) added, for example.

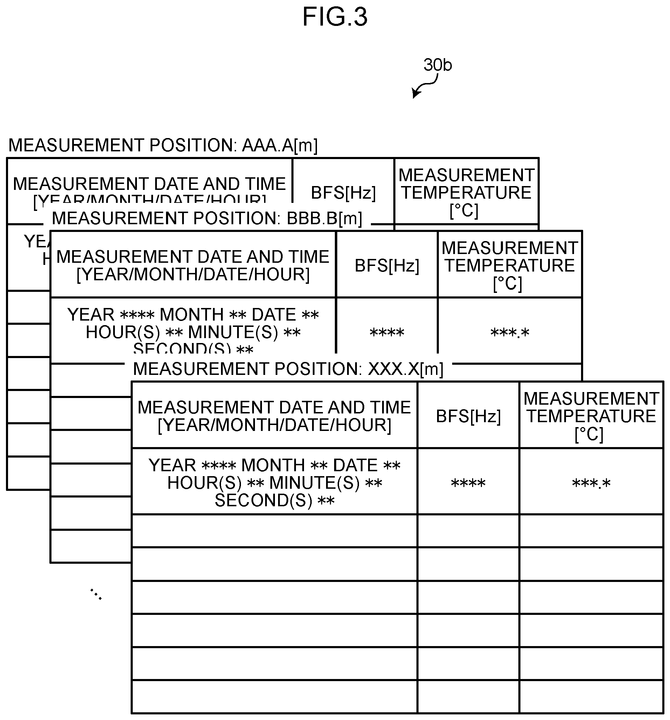

FIG. 3 is an explanatory diagram illustrating an example of the recording data 30b. As illustrated in FIG. 3, the recording data 30b has recorded measurement date and time [year/month/date/hour], BFS [Hz], and a measurement temperature [°C] at the measurement positions AAA.A [m] and BBB.B [m]...XXX.X [m] on the measurement object optical fiber 10. That is, the recording data 30b has recorded the amount of exposure time (total time obtained from measurement dates and times) regarding the exposure to a temperature environment of the measurement temperature [°C].

The control unit 31 is a computer implemented by a processor, for example, and includes a BFS measurement unit 31a, a BFS correction unit 31b, a temperature calculation unit 31c, and a recording unit 31d.

The BFS measurement unit 31a is a processing unit that measures (acquires) a Brillouin Frequency Shift (BFS) at each measurement position on the measurement object optical fiber 10. Specifically, the BFS measurement unit 31a causes a pump beam and a probe beam for each measurement position to be incident on the measurement object optical fiber 10 from the light emitting unit 11. Next, the BFS measurement unit 31a uses the light receiving unit 12 to receive scattered light of Brillouin scattering that occurs at each measurement position, thereby acquiring the Brillouin Frequency Shift (BFS).

The BFS correction unit 31b is a processing unit that corrects the Brillouin Frequency Shift (BFS) at each measurement position acquired by the BFS measurement unit 31a based on the amount of exposure time recorded in the recording data 30b. Specifically, when the amount of exposure time recorded in the recording data 30b is less than the amount of time t1 for starting high frequency-side drift set in the setting information 30a, the BFS correction unit 31b performs correction corresponding to the low frequency-side drift that occurs in accordance with the amount of exposure time.

The low frequency-side drift is a phenomenon caused by a change in the glass structure of the measurement object optical fiber 10, which is referred to as structural relaxation under a high temperature environment. The change in the glass structure of the measurement object optical fiber 10 also changes the physical property value of the glass, leading to occurrence of a low frequency-side drift of the BFS with the passage of the amount of exposure time regardless of the constant annealing temperature. Since this low frequency-side drift is known as a function of the amount of exposure time, the BFS correction unit 31b performs correction corresponding to the low frequency-side drift by using this function.

The low frequency-side drift is a phenomenon caused by a change in the glass structure of the measurement object optical fiber 10, which is referred to as structural relaxation under a high temperature environment. The change in the glass structure of the measurement object optical fiber 10 also changes the physical property value of the glass, leading to occurrence of a low frequency-side drift of the BFS with the passage of the amount of exposure time regardless of the constant annealing temperature. Based on the thermal history of the measurement object optical fiber 10, the BFS correction unit 31b predicts a change amount of the BFS due to the structural relaxation of the measurement object optical fiber 10, and then uses the predicted change amount to correct the BFS acquired by the BFS measurement unit 31a.

The BFS correction unit 31b predicts the change amount in the BFS due to the structural relaxation of the measurement object optical fiber 10 described above by using a fictive temperature prediction formula indicating a chronological change in the fictive temperature of the measurement object optical fiber 10. Here, the fictive temperature is a temperature of a stable structure of a subcooled liquid to which the glass structure has a correspondence. When the annealing time is t and the chronological change in the fictive temperature is T_{f}(t), the chronological change T_{f}(t) of the fictive temperature can be expressed by the following formula (3).${T}_{f} \left(t\right) = α ⋅ exp \left(\frac{t}{{τ}_{1}}\right) + β ⋅ exp \left(\frac{t}{{τ}_{1}}\right) + {T}_{f 0}$

In formula (3), τ1 is a relaxation time, α and β are coefficients, and T_{f0} is a fictive temperature in an initial state of the measurement object optical fiber 10. The initial state of the measurement object optical fiber 10 is a state before the measurement object optical fiber 10 undergoes annealing treatment.

Here, in a case where annealing treatment is performed on the measurement object optical fiber 10, the chronological change of the fictive temperature varies depending on the fictive temperature T_{f0} in the initial state of the measurement object optical fiber 10 and the annealing temperature Ta. Therefore, the chronological change T_{f}(t) of the fictive temperature expressed by the above formula (3) is obtained for each combination of the fictive temperature T_{f0} in the initial state of the measurement object optical fiber 10 and the annealing temperature Ta.

The relationship between the chronological change BFS(t) of the BFS and the chronological change T_{f}(t) of the fictive temperature is expressed by the following formula (4). In the following formula (4), k is a coefficient, and n is a constant.$BFS \left(t\right) = k ⋅ {T}_{f} \left(t\right) + n$

A change amount ΔBFS(t) of the BFS when the annealing time t has passed since the start of the annealing treatment for the optical fiber is expressed by the following formula (5). Note that T_{f0} in the following formula (5) is a fictive temperature at the start of the annealing treatment.$Δ BFS \left(t\right) = k ⋅ \left({T}_{f}\left(t\right)-{T}_{f 0}\right)$

Here, when it is considered that the annealing treatment for the measurement object optical fiber 10 is performed by the heat of the measurement object, the above formula (5) can be considered to be a formula indicating the change amount ΔBFS of the BFS at the timing of passage of the amount of exposure time t during which the measurement position on the measurement object optical fiber 10 is exposed to a predetermined temperature environment. Accordingly, the change amount ΔBFS of the BFS of the measurement object optical fiber 10 can be predicted from the above formula (5). In the present embodiment, the BFS correction unit 31b predicts the change amount ΔBFS of the BFS using the above formula (5), and corrects the BFS acquired by the BFS measurement unit 31a using the predicted change amount ΔBFS of the BFS.

In addition, when the amount of exposure time recorded in the recording data 30b is equal to or more than the amount of time t1 for starting high frequency-side drift set in the setting information 30a, the BFS correction unit 31b performs a correction corresponding to the high frequency-side drift occurring in accordance with the amount of exposure time by using the calculation formula (2) of calculating the BFS correction value for each temperature (annealing temperature) included in the setting information 30a. That is, when the amount of exposure time becomes equal to or more than the amount of time t1 for starting high frequency-side drift, the BFS correction unit 31b switches from the correction corresponding to the low frequency-side drift to the correction corresponding to the high frequency-side drift.

The temperature calculation unit 31c is a processing unit that applies the BFS-temperature conversion formula (1) to the BFS, which has been acquired by the BFS measurement unit 31a and corrected by the BFS correction unit 31b, to calculate the temperature at each measurement position.

The recording unit 31d is a processing unit that records a history of measurement results (BFS, measurement temperature, measurement date and time) at each measurement position on the measurement object optical fiber 10, as the recording data 30b. Specifically, the recording unit 31d records, as the recording data 30b, the BFS at each measurement position on the measurement object optical fiber 10 acquired by the BFS measurement unit 31a and the measurement temperature calculated by the temperature calculation unit 31c, with the time stamp (measurement date and time), etc. added. Note that the recording unit 31d may include the BFS correction value obtained by the BFS correction unit 31b by the calculation formula (2), etc. in the history of measurement results at each measurement position on the measurement object optical fiber 10.

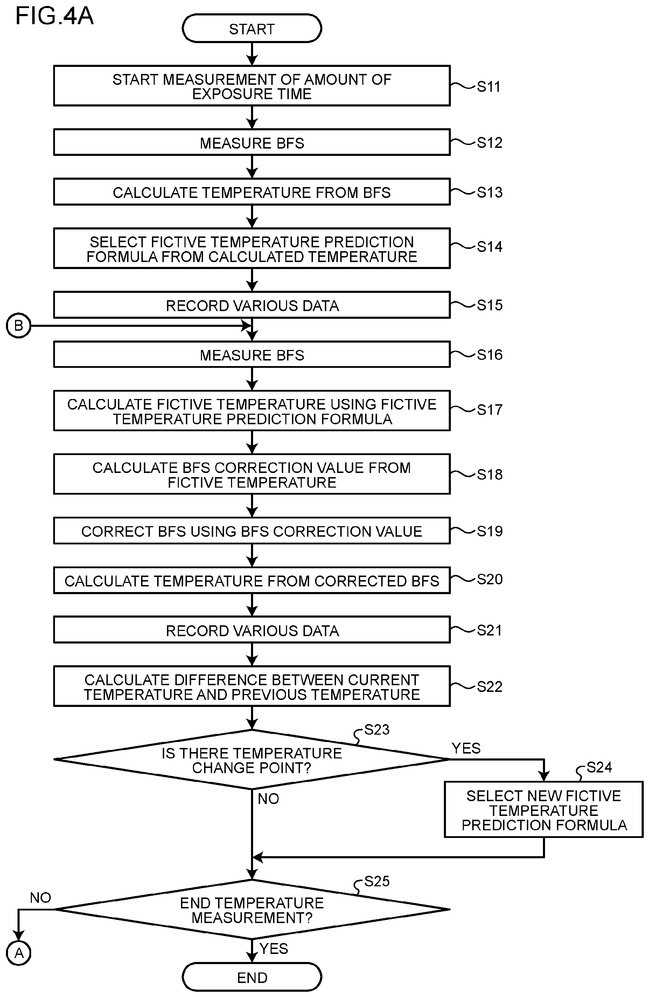

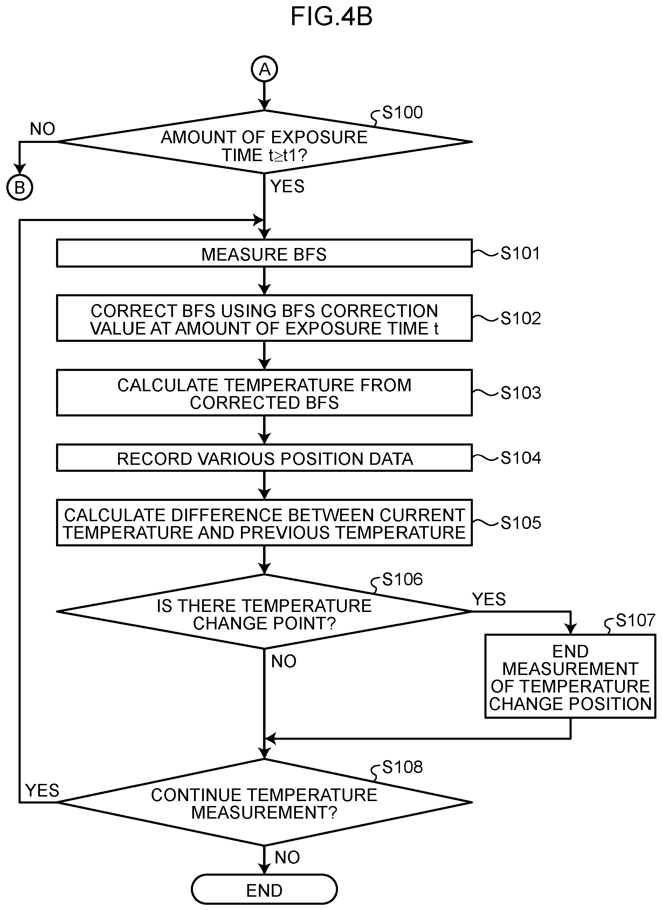

FIGS. 4A and 4B are flowcharts each illustrating an operation example of the temperature measurement apparatus according to the embodiment. As illustrated in FIGS. 4A and 4B, when the processing is started, the recording unit 31d starts measuring the amount of exposure time based on the time stamp (measurement date and time) of the recording data 30b (S11).

Next, the BFS measurement unit 31a measures the BFS at each measurement position on the measurement object optical fiber 10 (S12). Next, the temperature calculation unit 31c uses the BFS-temperature conversion formula (1) to calculate the temperature at each measurement position from the measured BFS (S13).

Next, the temperature calculation unit 31c selects a fictive temperature prediction formula from the calculated temperatures (S14). This fictive temperature prediction formula is a formula for selecting a fictive temperature corresponding to the calculated temperature, and a fictive temperature prediction formula for each temperature is included in the setting information 30a in advance.

Next, the recording unit 31d records, in the recording data 30b, various data such as the BFS measured at each measurement position and the calculated temperature with a time stamp (measurement date and time) added (S15).

Next, the BFS measurement unit 31a measures the BFS at each measurement position on the measurement object optical fiber 10 (S16). Next, the temperature calculation unit 31c calculates a fictive temperature using the selected fictive temperature prediction formula (S17).

Next, the BFS correction unit 31b calculates a BFS correction value corresponding to the above-described low frequency-side drift from the calculated fictive temperature (S18). Next, the BFS correction unit 31b corrects the BFS measured in S16 using the calculated BFS correction value (S19).

Next, the temperature calculation unit 31c calculates the temperature from the corrected BFS by using the BFS-temperature conversion formula (1) (S20). Next, the recording unit 31d records, in the recording data 30b, various data such as the BFS measured at each measurement position, the BFS correction value, and the calculated temperature, with a time stamp (measurement date and time) added (S21).

Next, the control unit 31 refers to the recording data 30b and calculates a difference between the current temperature and the previous temperature at each measurement position (S22). Next, the control unit 31 determines whether there is a temperature change point (measurement position) based on the calculated difference (S23).

When there is a temperature change point (S23: Yes), the temperature calculation unit 31c selects a new fictive temperature prediction formula based on the current temperature (S24), and proceeds to the processing of S25. When there is no temperature change point (S23: No), the temperature calculation unit 31c skips S24 and proceeds to the processing of S25.

In S25, the control unit 31 determines whether to end the temperature measurement based on the presence or absence of an end instruction from the user, etc. (S25). When having determined to end the temperature measurement (S25: Yes), the control unit 31 ends the processing.

When having determined not to end the temperature measurement (S25: No), the BFS correction unit 31b refers to the recording data 30b and determines whether the amount of exposure time t at each measurement position satisfies amount of exposure time t ≥ amount of time t1 for starting (high-frequency) drift (S100).

Here, the BFS correction unit 31b may obtain the amount of exposure time t at each measurement position as a total amount of measurement time. In addition, the BFS correction unit 31b may obtain the amount of exposure time t at each measurement position as a total amount of time in which the predetermined temperature (for example, OO°C or △ △°C) has been measured. The amount of time t1 for starting high frequency drift may be an eigenvalue (for example, a value for each temperature) included in the setting information 30a. For example, the BFS correction unit 31b may obtain the amount of time t1 for starting high frequency drift, corresponding to the temperature used for obtaining the amount of exposure time t, from among the values for each temperature included in the setting information 30a.

When amount of exposure time t ≥ amount of time t1 for starting high frequency drift is not satisfied (S100: No), the control unit 31 returns the processing to S16.

When amount of exposure time t ≥ amount of time t1 for starting high frequency drift is satisfied (S100: Yes), the BFS measurement unit 31a measures the BFS at each measurement position on the measurement object optical fiber 10 (S101). Next, by using the calculation formula (2) of the BFS correction value based on the amount of exposure time recorded in the recording data 30b, the BFS correction unit 31b calculates the BFS correction value of the high frequency-side drift that occurs in accordance with the amount of exposure time. Here, the calculation formula (2) is set in advance for each temperature (annealing temperature) in the setting information 30a of the storage unit 30. The BFS correction unit 31b selects the calculation formula (2) corresponding to the current temperature from among the calculation formulas (2) of the BFS correction value for each temperature (annealing temperature) included in the setting information 30a. Next, the BFS correction unit 31b corrects the BFS using the calculated BFS correction value (S102).

Next, the temperature calculation unit 31c calculates the temperature from the corrected BFS by using the BFS-temperature conversion formula (1) (S103). Next, the recording unit 31d records, in the recording data 30b, various position data such as the BFS measured at each measurement position, the BFS correction value, and the calculated temperature, with a time stamp (measurement date and time) added (S104).

Next, the control unit 31 refers to the recording data 30b and calculates a difference between the current temperature and the previous temperature at each measurement position (S105). Next, based on the calculated difference, the control unit 31 determines whether there is a temperature change point (measurement position) equal to or more than the design value in the calculation formula (2) (S106).

When there is a temperature change point (S106: Yes), the temperature calculation unit 31c ends the measurement of the temperature change position (S107), and proceeds to the processing of S108. When there is no temperature change point (S106: No), the temperature calculation unit 31c skips S107 and proceeds to the processing of S108.

In S108, the control unit 31 determines whether to continue the temperature measurement based on the presence or absence of an end instruction from the user, etc. (S108). Note that the determination in S108 may determine not to continue when there is a temperature change position at which the measurement has been ended.

When determined to continue the temperature measurement (S108: Yes), the control unit 31 returns the processing to S101. When determined not to continue the temperature measurement (S108: No), the control unit 31 ends the measurement.

As described above, the temperature measurement apparatus 1 measures the amount of exposure time during which the measurement position on the measurement object optical fiber 10 is exposed to a predetermined temperature environment. The temperature measurement apparatus 1 acquires the Brillouin Frequency Shift (BFS) from the measurement position on the measurement object optical fiber 10. When the amount of exposure time has passed by a predetermined amount of time (amount of time for starting high frequency-side drift), the temperature measurement apparatus 1 corrects the Brillouin Frequency Shift (BFS) in accordance with the drift toward the high frequency side based on the amount of exposure time. The temperature measurement apparatus 1 calculates the temperature at the measurement position based on the Brillouin Frequency Shift (BFS). This makes it possible for the temperature measurement apparatus 1 to cope with a high frequency-side drift of the BFS occurring on and beyond a predetermined amount of exposure time, and can perform temperature measurement with high measurement accuracy for long hours.

The temperature measurement apparatus 1 corrects the Brillouin Frequency Shift in accordance with the drift toward the low frequency side based on the amount of exposure time until the amount of exposure time t passes by a predetermined amount of time (amount of time for starting high frequency-side drift). This makes it possible for the temperature measurement apparatus 1 to cope with the low frequency-side drift of the BFS occurring with the amount of exposure time until the start of the high frequency-side drift, leading to achievement of temperature measurement with high measurement accuracy.

In addition, the temperature measurement apparatus 1 records, in the recording data 30b, the amount of exposure time and the temperature of each of the plurality of measurement positions of the measurement object optical fiber 10. This makes it possible for the temperature measurement apparatus 1 to measure the history of the amount of exposure time and the temperature of each of the plurality of measurement positions of the measurement object optical fiber 10.

In addition, when the recorded amount of exposure time has passed by the amount of time for starting high frequency-side drift based on the recorded history of temperature for each of the plurality of measurement positions of the measurement object optical fiber 10, the temperature measurement apparatus 1 corrects the Brillouin Frequency Shift (BFS) in accordance with the drift toward the high frequency-side based on the amount of exposure time and the temperature. This makes it possible for the temperature measurement apparatus 1 to more accurately correct the high frequency-side drift of the BFS based on the temperature history recorded for each of the plurality of measurement positions of the measurement object optical fiber 10.

In addition, the temperature measurement apparatus 1 obtains ΔBFS, which is a correction value of the Brillouin Frequency Shift, based on formula (2) when the amount of exposure time is t, the amount of time for starting high frequency-side drift based on the temperature is t1, the coefficients corresponding to the temperature are a and b, and the constant is c. This makes it possible for the temperature measurement apparatus 1 to more accurately obtain the correction value of the Brillouin Frequency Shift.

The temperature measurement apparatus 1 may use the measurement object optical fiber 10 in which the amount of time t1 for starting high frequency-side drift is reached later, as the sensor. This makes it possible to eliminate the necessity to correct the measured BFS, leading to achievement of temperature measurement with high measurement accuracy for long hours on condition that the lifetime of the sensor in the light emitting unit 11 and the light receiving unit 12 is equal to or less than the amount of time t1 for starting high frequency-side drift. In addition, even when the lifetime of the sensor is not equal to or less than the amount of time t1 for starting high frequency-side drift, the period for correction can be further shortened.

In addition, the temperature measurement apparatus 1 may use the measurement object optical fiber 10 whose core is not doped with Ge. For example, it is considered that Ge doped in the core diffuses into the clad under a high temperature environment, thereby causing a decrease in Young's modulus of the core and causing the high frequency-side drift. Therefore, by using the measurement object optical fiber 10 whose core is not doped with Ge, there is a possibility of suppressing the occurrence of the high frequency-side drift in the temperature measurement apparatus 1. This can eliminate the necessity to correct the measured BFS, leading to achievement of temperature measurement with high measurement accuracy for long hours.

In addition, a prediction formula for predicting the BFS temporal change of the high frequency-side drift of the measurement object optical fiber 10 for each annealing temperature may be formed in advance from the relationship between the annealing temperature and the Ge diffusion coefficient. By using this prediction formula in the temperature measurement apparatus 1, it is possible to predict the BFS temporal change of the high frequency-side drift when the annealing temperature is low, which is difficult to obtain by experiment, for example.

Some examples of combinations of the disclosed technical features are described below.
(1) A temperature measurement apparatus including a control unit that
   acquires a Brillouin Frequency Shift from a measurement position of a measurement object optical fiber,
   when an amount of exposure time, which is an amount of time during which the measurement position on the measurement object optical fiber is exposed to a predetermined temperature environment, has passed by a predetermined amount of time, corrects the Brillouin Frequency Shift in accordance with a drift toward a high frequency side, based on the amount of exposure time, and
   calculates a measurement temperature at the measurement position based on the corrected Brillouin Frequency Shift.
(2) The temperature measurement apparatus according to (1),
   wherein the control unit records the amount of exposure time and the measurement temperature of each of a plurality of measurement positions on the measurement object optical fiber.
(3) The temperature measurement apparatus according to (2),
   wherein the predetermined amount of time is an amount of time determined by the predetermined temperature environment, and
   the control unit corrects the Brillouin Frequency Shift based on the predetermined temperature environment, the predetermined amount of time, and the amount of exposure time, for each of a plurality of measurement positions on the measurement object optical fiber, having different predetermined temperature environments.
(4) The temperature measurement device according to (1) to (3),
   wherein the control unit obtains ΔBFS, which is a correction value of the Brillouin Frequency Shift, based on formula (1) when the amount of exposure time is t, a predetermined amount of time based on the predetermined temperature environment is t1, coefficients corresponding to the predetermined temperature environment are a and b, and a constant is c, $ΔBFS \left(t\right) = a ⋅ {\left(t-t1\right)}^{2} + b ⋅ \left(t-t1\right) + c$
(5) The temperature measurement apparatus according to (4),
   wherein the control unit obtains the ΔBFS by acquiring formula (1) corresponding to the predetermined temperature environment from among formulas (1) for each predetermined temperature environment stored in a storage unit.
(6) The temperature measurement apparatus according to (1) to (3),
   wherein the control unit corrects the Brillouin Frequency Shift in accordance with a drift toward a low frequency side based on the amount of exposure time until the amount of exposure time passes by a predetermined amount of time.
(7) The temperature measurement apparatus according to (6),
   wherein, when the amount of exposure time has passed by a predetermined amount of time, the control unit switches from correction of the Brillouin Frequency Shift corresponding to the drift toward the low frequency side to correction of the Brillouin Frequency Shift corresponding to the drift toward the high frequency side.
(8) The temperature measurement apparatus according to (6),
   wherein the control unit obtains ΔBFS, which is a correction value of the Brillouin Frequency Shift, based on formula (2) when the amount of exposure time is t and a coefficient corresponding to the predetermined temperature environment is k, $Δ BFS \left(t\right) = k ⋅ \left({T}_{f}\left(t\right)-{T}_{f 0}\right)$
(9) A temperature measurement method in which a computer executes processing including
   acquiring a Brillouin Frequency Shift from a measurement position of a measurement object optical fiber,
   when an amount of exposure time, which is an amount of time during which the measurement position on the measurement object optical fiber is exposed to a predetermined temperature environment, has passed by a predetermined amount of time, correcting the Brillouin Frequency Shift in accordance with a drift toward a high frequency side, based on the amount of exposure time, and
   calculating a measurement temperature at the measurement position based on the corrected Brillouin Frequency Shift.
(10) The temperature measurement method according to (9), in which the computer records the amount of exposure time and the measurement temperature of each of a plurality of measurement positions of the measurement object optical fiber.
(11) The temperature measurement method according to (10),
   in which the predetermined amount of time is an amount of time determined by the predetermined temperature environment, and
   the computer corrects the Brillouin Frequency Shift based on the predetermined temperature environment, the predetermined amount of time, and the amount of exposure time, for each of a plurality of measurement positions on the measurement object optical fiber, having different predetermined temperature environments.
(12) The temperature measurement method according to (9) to (11),
   in which the computer obtains ΔBFS, which is a correction value of the Brillouin Frequency Shift, based on formula (2) when the amount of exposure time is t, a predetermined amount of time based on the predetermined temperature environment is t1, coefficients corresponding to the predetermined temperature environment are a and b, and a constant is c.
(13) The temperature measurement method according to (12),
   in which the computer obtains the ΔBFS by acquiring formula (2) corresponding to the predetermined temperature environment from among formulas (2) for each predetermined temperature environment stored in a storage unit.
(14) The temperature measurement method according to (9) to (11),
   in which the computer corrects the Brillouin Frequency Shift in accordance with a drift toward a low frequency side based on the amount of exposure time until the amount of exposure time passes by a predetermined amount of time.
(15) The temperature measurement method according to (14),
   in which, when the amount of exposure time has passed by a predetermined amount of time, the computer switches from correction of the Brillouin Frequency Shift corresponding to the drift toward the low frequency side to correction of the Brillouin Frequency Shift corresponding to the drift toward the high frequency side.
(16) The temperature measurement method according to (14),
   in which the computer obtains ΔBFS, which is a correction value of the Brillouin Frequency Shift, based on formula (5) when the amount of exposure time is t and a coefficient corresponding to the predetermined temperature environment is k.

### Reference Signs List

- 1: TEMPERATURE MEASUREMENT APPARATUS
- 2, 101: OPTICAL FIBER SENSOR
- 3, 100: OPTICAL FIBER CHARACTERISTIC MEASUREMENT DEVICE
- 10: MEASUREMENT OBJECT OPTICAL FIBER
- 11: LIGHT EMITTING UNIT
- 12: LIGHT RECEIVING UNIT
- 30: STORAGE UNIT
- 30a: SETTING INFORMATION
- 30b: RECORDING DATA
- 31: CONTROL UNIT
- 31a: BFS MEASUREMENT UNIT
- 31b: BFS CORRECTION UNIT
- 31c: TEMPERATURE CALCULATION UNIT
- 31d: RECORDING UNIT
- 102, 103: POSITION
- C1, C2: CASE
- R1, R2: EXPERIMENTAL RESULTS

## Claims

1. A temperature measurement apparatus comprising a control unit that:
acquires a Brillouin Frequency Shift from a measurement position of a measurement object optical fiber;
when an amount of exposure time, which is an amount of time during which the measurement position on the measurement object optical fiber is exposed to a predetermined temperature environment, has passed by a predetermined amount of time, corrects the Brillouin Frequency Shift in accordance with a drift toward a high frequency side, based on the amount of exposure time; and
calculates a measurement temperature at the measurement position based on the corrected Brillouin Frequency Shift.

2. The temperature measurement apparatus according to claim 1,
wherein the control unit records the amount of exposure time and the measurement temperature of each of a plurality of measurement positions on the measurement object optical fiber.

3. The temperature measurement apparatus according to claim 2,
wherein the predetermined amount of time is an amount of time determined by the predetermined temperature environment, and
the control unit corrects the Brillouin Frequency Shift based on the predetermined temperature environment, the predetermined amount of time, and the amount of exposure time, for each of a plurality of measurement positions on the measurement object optical fiber, having different predetermined temperature environments.

4. The temperature measurement apparatus according to claims 1 to 3,
wherein the control unit obtains ΔBFS, which is a correction value of the Brillouin Frequency Shift, based on formula (1) when the amount of exposure time is t, a predetermined amount of time based on the predetermined temperature environment is t1, coefficients corresponding to the predetermined temperature environment are a and b, and a constant is c, $ΔBFS \left(t\right) = a ⋅ {\left(t-t1\right)}^{2} + b ⋅ \left(t-t1\right) + c$

5. The temperature measurement apparatus according to claim 4,
wherein the control unit obtains the ΔBFS by acquiring formula (1) corresponding to the predetermined temperature environment from among formulas (1) for each predetermined temperature environment stored in a storage unit.

6. The temperature measurement apparatus according to claims 1 to 3,
wherein the control unit corrects the Brillouin Frequency Shift in accordance with a drift toward a low frequency side based on the amount of exposure time until the amount of exposure time passes by a predetermined amount of time.

7. The temperature measurement apparatus according to claim 6,
wherein, when the amount of exposure time has passed by a predetermined amount of time, the control unit switches from correction of the Brillouin Frequency Shift corresponding to the drift toward the low frequency side to correction of the Brillouin Frequency Shift corresponding to the drift toward the high frequency side.

8. The temperature measurement apparatus according to claim 6,
wherein the control unit obtains ΔBFS, which is a correction value of the Brillouin Frequency Shift, based on formula (2) when the amount of exposure time is t and a coefficient corresponding to the predetermined temperature environment is k, $Δ BFS \left(t\right) = k ⋅ \left({T}_{f}\left(t\right)-{T}_{f 0}\right)$

9. A temperature measurement method in which a computer executes processing comprising:
acquiring a Brillouin Frequency Shift from a measurement position of a measurement object optical fiber;
when an amount of exposure time, which is an amount of time during which the measurement position on the measurement object optical fiber is exposed to a predetermined temperature environment, has passed by a predetermined amount of time, correcting the Brillouin Frequency Shift in accordance with a drift toward a high frequency side, based on the amount of exposure time; and
calculating a measurement temperature at the measurement position based on the corrected Brillouin Frequency Shift.
